# EUROPEAN PATENT SPECIFICATION

(11) **EP 4 152 965 B1**
(45) Date of publication and mention of the grant of the patent: **06.03.2024**
(21) Application number: 21749343.6
(22) Date of filing: 29.07.2021
(51) Int. Cl.: A23N 17/00, A23P 30/20, B29C 48/30, A23K 40/25, A01K 15/02

(54) **DIE, PLANT AND PROCESS FOR PRODUCING EDIBLE SNACKS FOR ANIMALS**
DÜSE, ANLAGE UND VERFAHREN FÜR DIE HERSTELLUNG ESSBARER SNACKS FÜR TIERE
BUSE, LIGNE ET PROCEDE POUR LA PRODUCTION DE SNACK COMESTIBLE POUR DES ANIMAUX

(30) Priority: 07.08.2020 IT 202000019684
(43) Date of publication of application: 29.03.2023
(73) Proprietor: Pavan S.p.A., 35015 Galliera Veneta (PD) (IT)
(72) Inventor: ANTONELLO, Vanni, 35015 Galliera Veneta (Padova) (IT)
(74) Representative: Dondi, Silvia
(86) International application number: PCT/IB2021/056926
(87) International publication number: WO 2022/029574

(56) References cited:
- EP-A1- 2 656 738
- EP-A2- 0 041 641
- WO-A1-2012/054489
- WO-A1-2016/083947
- WO-A1-2016/151064
- WO-A1-2017/174518
- WO-A1-2019/071336
- US-A1- 2006 188 632
- US-A1- 2008 038 412

## Description

### Technical field

The present invention relates to a die, a plant and a process for producing edible snacks for animals.

### Background art

Food products for animals are known, which conciliate the sustenance function with other functions. Among these, food products for animals are known, for example for dogs or cats, which have the purpose of dealing with for dental hygiene.

In particular, a solution of the known type envisages the use of recipes that contain particles adapted to remove dirt from teeth (e.g. bentonite), whereas another known solution envisages the use of pointed shapes able to enter between one tooth and another for cleaning. There are also solutions that use the two aforesaid characteristics in combination.

The solutions of the known type described above have the drawback that the mechanical cleaning of the teeth is left to chance, i.e. it is not guaranteed in a repeatable way.

From document US 2006/188632 A1 and WO 2019/071336 A1 there are known pet treats obtained by extrusion. These pet treats have grooves and protrusions that can penetrate in the pet's teeth.

### Disclosure of the invention

In this context, the technical task underpinning the present invention is that of proposing a die, a plant and a process for producing edible snacks for animals, which obviate the drawbacks of the prior art cited above.

In particular, the object of the present invention is to propose a die, a plant and a process for producing edible snacks for animals, able to produce snacks that guarantee the repeatable cleaning of teeth, i.e. not left to chance.

Another object of the present invention is to provide a production plant of edible snacks for animals, having a simplified structure with respect to the solutions of the prior art.

The technical task specified and the objects specified are substantially achieved by a die according to claim 1, comprising at least one through drawing cavity having a prevalent development along a longitudinal direction. Originally, the through cavity comprises at least a first group of grooves and a second group of grooves having a development substantially parallel to the longitudinal direction. In a transversal section with respect to the longitudinal direction, each groove of the first group has a greater depth than the depth of each groove of the second group. Each groove of the first group alternates with a groove of the second group.

Preferably, the grooves of the first group have the same depth.

Preferably, the grooves of the second group have the same depth.

According to one embodiment, the grooves of the first group and the grooves of the second group are respectively three and are defined by the intersection of a first geometric figure and a second geometric figure with three tips rotated with respect to one another. The first figure is similar and has larger dimensions than the second figure.

According to one embodiment, the first geometric figure and the second geometric figure are rotated substantially by 180° with respect to one another.

According to one embodiment, the first geometric figure and the second geometric figure are triangles.

According to one embodiment, the first geometric figure and the second geometric figure are three-pointed stars.

The defined technical task and the specified objects are substantially achieved by a production plant of edible snacks for animals, comprising:
- a dosing unit of ingredients of the solid and/or liquid type;
- a kneading unit of the ingredients so as to obtain a dough;
- an extrusion and cooking unit of the dough, which comprises a die according to any one of claims 1-6, the die receiving the cooked dough at the inlet of the through cavity and providing elongated products at the outlet of the through cavity;
- a cutting unit operatively active on the elongated products coming from the die so as to cut them transversely and to obtain a plurality of snacks.

Preferably, the production plant further comprises a cooling unit for cooling the snacks, placed downstream of the cutting unit.

Preferably, the cutting unit comprises a cutting station in which the products to be cut are arranged and a double-edged guillotine arranged at the cutting station and mobile in alternative motion between a first position above the cutting station and a second position below the cutting station. Preferably, the extrusion and cooking unit comprises one or more extrusion screws developing along an advancing direction of the dough.

The production plant further comprises a compression screw for the dough arranged upstream of the extrusion and cooking unit having a development inclined with respect to the advancing direction of the dough. Preferably, the extrusion and cooking unit comprises a gas removal station for removing gas from the dough arranged upstream of the die.

The defined technical task and the specified objects are substantially achieved by a production process of edible snacks for animals, comprising the steps of:
- dosing at least a first amount of solid ingredients and/or a second amount of liquid ingredients according to a predetermined recipe;
- kneading the dosed ingredients so as to obtain a dough;
- extruding and cooking the dough;
- making the extruded and cooked dough pass into a die according to any one of claims 1-6, the die receiving the cooked dough at the inlet of the through cavity and providing elongated products at the outlet of the through cavity;
- cutting the elongated products into a plurality of edible snacks;
- cooling the snacks.

Preferably, the production process comprises a step of compressing the dough before the step of extruding and cooking the dough.

### Brief description of drawings

Further characteristics and advantages of the present invention will become clearer from the indicative, and therefore non-limiting, description of a preferred but not exclusive embodiment of a die, a plant and a process for producing edible snacks for animals, as illustrated in the attached drawings, in which:
- figure 1 illustrates a sectional view of a die, according to the present invention;
- figure 2 shows a view from one side (inlet) of an embodiment of the die of figure 1;
- figure 3 shows a view from the opposite side (outlet) of the die of figure 1;
- figure 4 shows a detail (inlet section of the through cavity) of the die of figure 1;
- figure 5 shows a detail (outlet section of the through cavity) of the die of figure 2;
- figure 6 shows a view from one side (inlet) of an alternative embodiment of the die of figure 1;
- figure 7 shows a view from the opposite side (outlet) of the alternative embodiment of the die of figure 1;
- figure 8 shows a detail (inlet section of the through cavity) of the die of figure 6;
- figure 9 shows a detail (outlet section of the through cavity) of the die of figure 7;
- figure 10 shows two triangles from the intersection of which the section of the through cavity of the embodiment of the die of figure 1 is obtained;
- figure 11 shows two three-pointed stars from the intersection of which the section of the through cavity of the embodiment of the die of figure 6 is obtained;
- figure 12 shows a perspective view of an embodiment of an edible snack for animals, obtained through the embodiment of the die of figure 1;

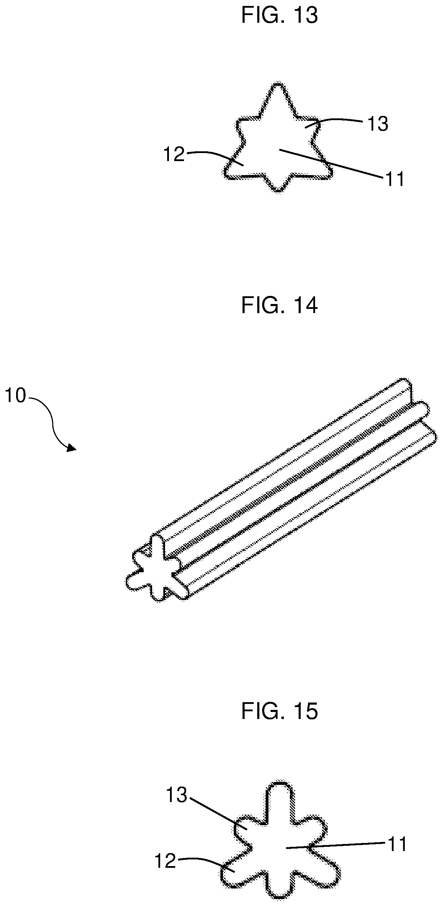

- figure 13 shows a front view of the snack of figure 12;
- figure 14 shows a perspective view of another embodiment the edible snack, obtained through the embodiment of the die of figure 6;
- figure 15 shows a front view of the snack of figure 14;

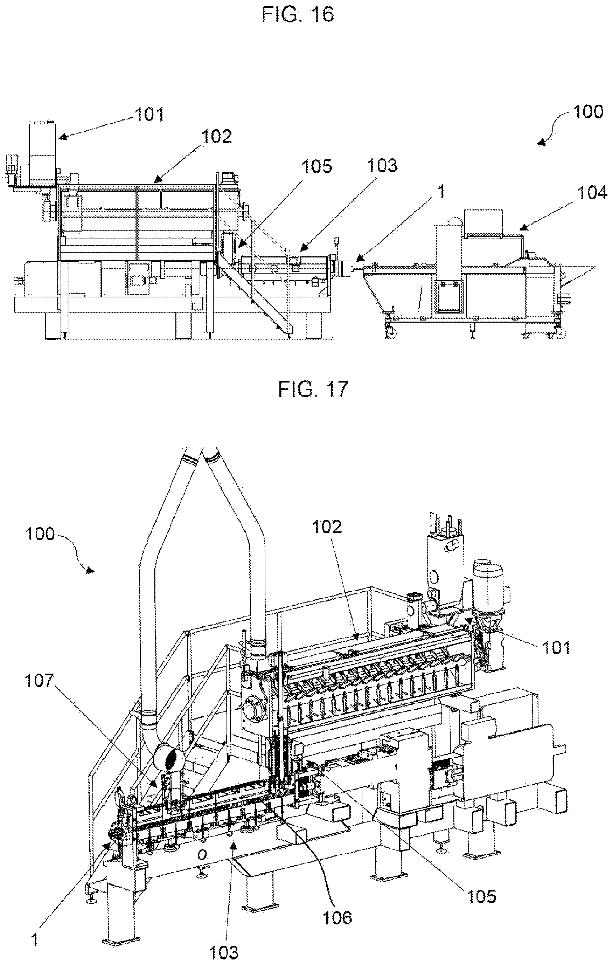

- figure 16 shows a production plant of edible snacks for animals, according to the present invention, in a front view;
- figure 17 shows a partially sectioned perspective view of the production plant of figure 16;

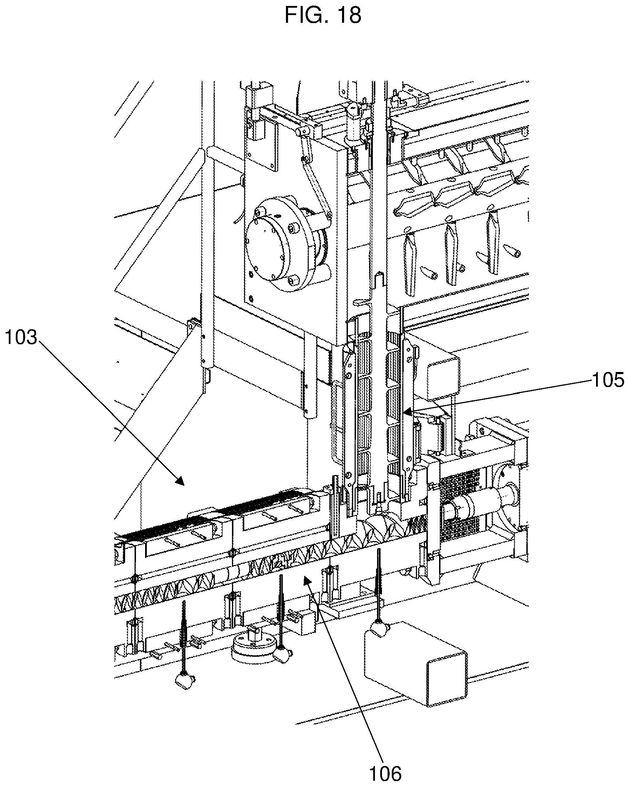

- figure 18 shows a detail (compression screw) of the production plant of figure 16.

### Detailed description of preferred embodiments of the invention

With reference to the figures, reference numeral 1 indicates a die for edible snacks for animals. The term "die" or "die plate" or "drawing machine" mean herein a unit comprising a perforated matrix through which a product to be narrowed and formed is passed, by forcing.

The die 1 comprises at least one through drawing cavity 2 having a prevalent development along a longitudinal direction 3.

Originally, the through cavity 2 comprises at least one first group of grooves 4 and a second group of grooves 5 having a substantially parallel development to the longitudinal direction 3. In particular, with reference to a transversal section with respect to the longitudinal direction 3, each groove 4 of the first group has a greater depth than the depth of each groove 5 of the second group. Each groove 4 of the first group alternates with a groove 5 of the second group.

The depth of the groove 4, 5 means the length of the groove 4, 5 considered in the cross section.

Preferably, the grooves 4 of the first group have the same depth.

Preferably, the grooves 5 of the second group have the same depth which, as mentioned above, is different from the depth of the grooves 4 of the first group.

According to one embodiment, the grooves 4, 5 of each group are substantially V-shaped. The vertex of the V-shaped groove 4, 5 may be pointed or rounded.

According to another embodiment, the grooves 4, 5 of each group are substantially U-shaped.

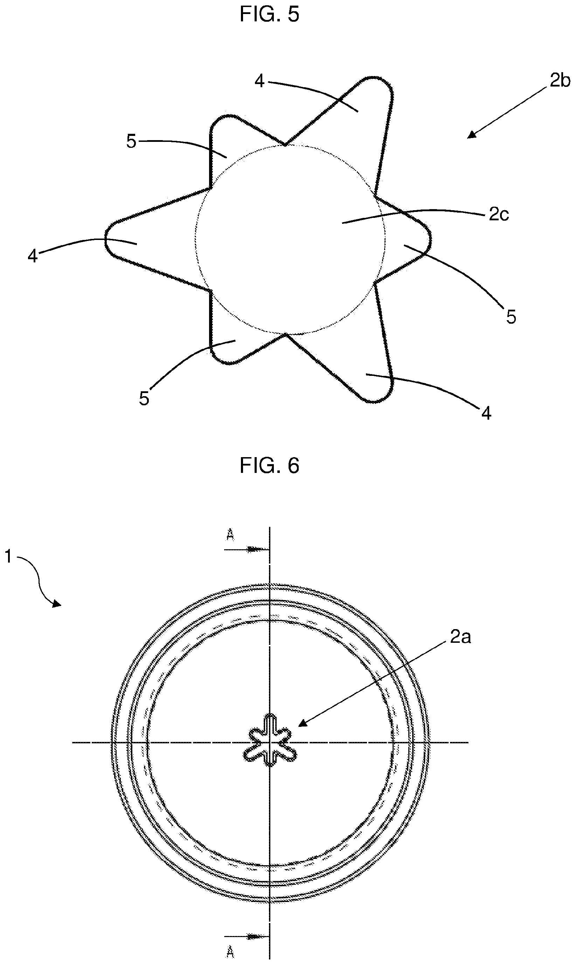

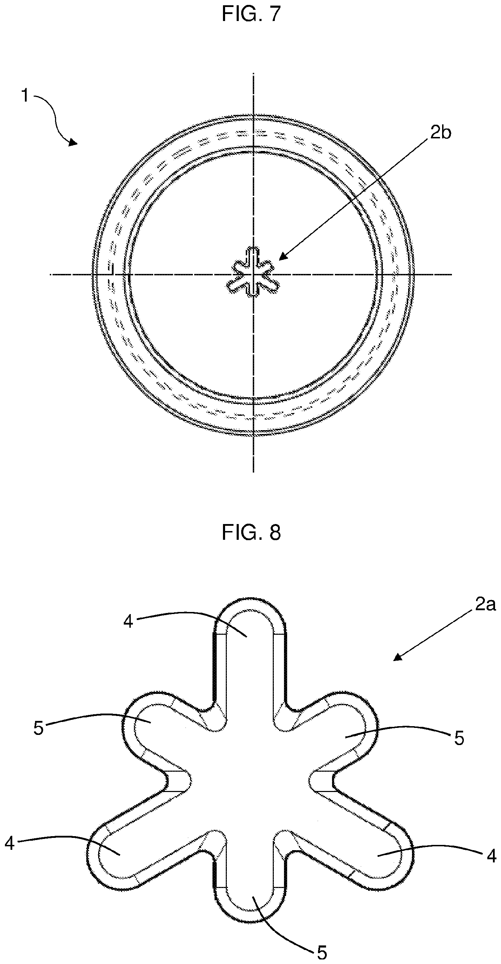

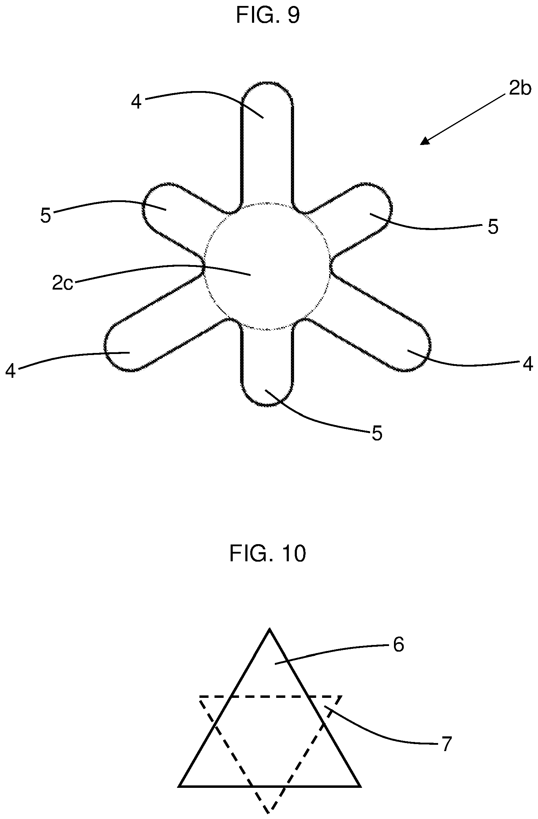

According to one embodiment, the grooves 4 of the first group and the grooves 5 of the second group are respectively three. They are defined by the intersection of a first geometric figure 6, 8 and a second geometric figure 7, 9 with three tips, which are rotated with respect to one another.

The first geometric figure 6, 8 and the second geometric figure 7, 9 are similar.

In general, the expression "similar" or "geometrically similar" means herein that there is an isometry that enables the second figure to be arranged so that it is a homothetic image of the first. More specifically, two polygons are said to be "geometrically similar" if the corresponding angles are substantially equal and the pairs of sides that comprise corresponding angles are proportional.

Specifically, the first geometric figure 6, 8 has larger dimensions than the second geometric figure 7, 9.

According to one aspect of the invention, the first geometric figure 6, 8 and the second geometric figure 7, 9 are rotated substantially by 180° with respect to one another.

According to one embodiment, shown in figure 10, the first geometric figure 6 and the second geometric figure 7 are similar triangles, rotated with respect to one another. The second triangle 7 has smaller dimensions than the first triangle 6.

Preferably, the two triangles 6, 7 are equilateral.

Preferably, the two triangles 6, 7 are rotated substantially by 180° with respect to one another.

In this embodiment, the grooves 4 of the first group are defined by the points of the first triangle 6 and the grooves 5 of the second group are defined by the points of the second triangle 7. A point of a triangle means a portion of the triangle situated in proximity to one of the vertices.

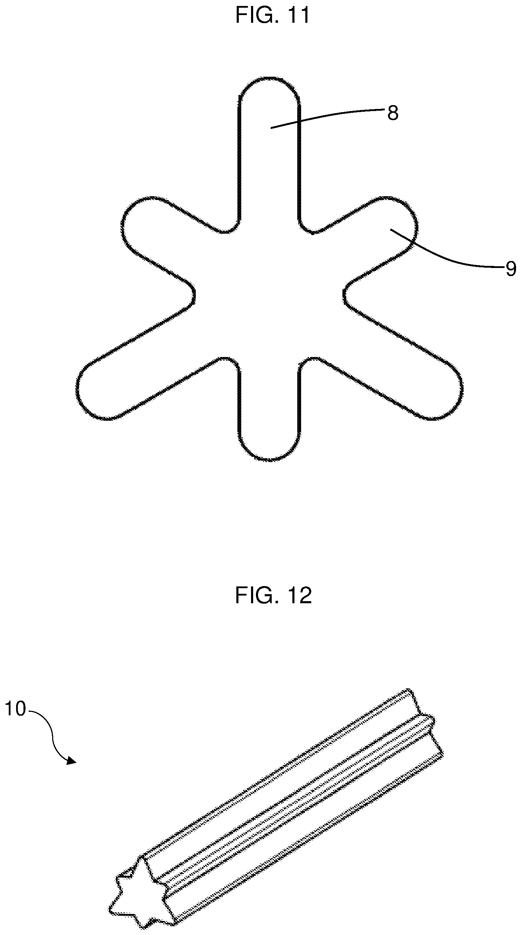

According to one embodiment, illustrated in figure 11, the first geometric figure 8 and the second geometric figure 9 are three-pointed stars.

The first three-pointed star 8 and the second three-pointed star 9 are rotated with respect to one another, preferably by 180°. The second three-pointed star 9 has smaller dimensions with respect to the first star 8.

In this case, the grooves 4 of the first group are defined by the points of the first star 8 and the grooves 5 of the second group are defined by the points of the second star 9.

The points of the stars 8, 9 may be rounded, as illustrated in figure 11, or may be pointed (variant not illustrated).

In this embodiment, as can be seen in figure 8 or 9, the through cavity 2 in the cross section is comprised of a circular central cavity 2c and by the grooves 4, 5 of the two groups that develop radially starting from the circular central cavity 2c.

According to a further embodiment (not illustrated), the through cavity 2 comprises further groups of grooves, wherein the grooves of each group have a different depth with respect to the grooves of the other groups. Preferably, the grooves of the different groups alternate transversally according to a predefined sequence.

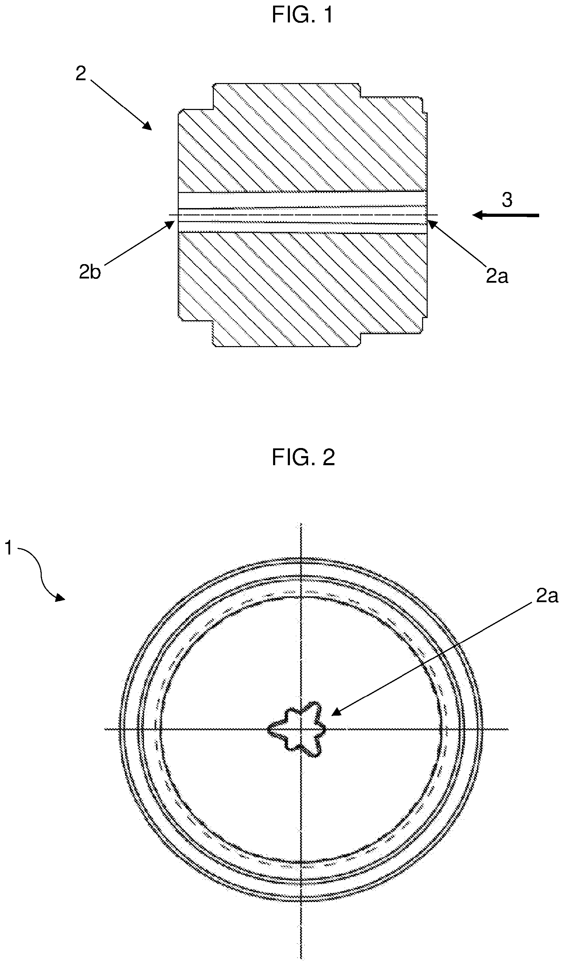

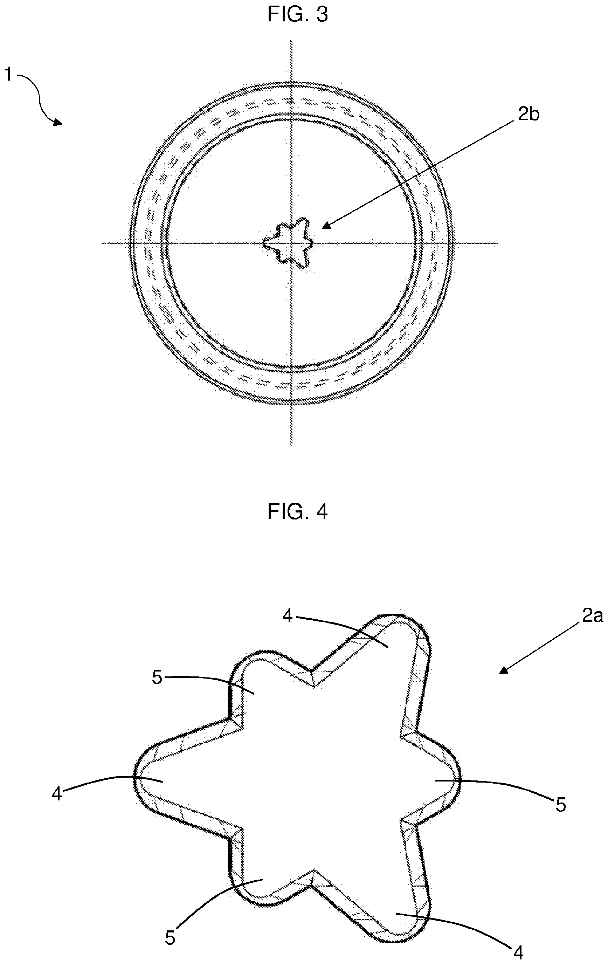

Preferably, as shown in figures 1 to 9, the through cavity 2 has a tapered development along the longitudinal direction 3, i.e. it has a cross section having gradually decreasing dimensions along the advancing direction of the dough. In other words, the dimensions of a cross section of the through cavity 2 in an inlet area (inlet section 2a) of the dough are greater with respect to the dimensions of a cross section in an outlet area of the dough (outlet section 2c).

According to one embodiment (not shown), the die 1 comprises a plurality of through cavities 2.

Such through cavities 2 may all be the same, e.g. with V-shaped grooves or with U-shaped grooves, or partially of one type and partially of the other type just described.

In another variant, one or more of the through cavities 2 may be made according to different embodiments from those described above, e.g. spiral shaped, substantially cylindrical, etc.

The die 1 receives at the inlet a cooked dough and transforms it into an elongated string for each through cavity 2 formed by a central core 11 having a prevalent development in a first direction, from which projections 12, 13 or ribs protrude, which also have a prevalent development along the first direction. The first direction is substantially parallel to the longitudinal development direction 3 of the die 1.

From the elongated string, a plurality of edible snacks 10 is obtained by cross cutting.

In particular, each edible snack 10 comprises at least one group of projections 12 and a second group of projections 13 obtained respectively from the first group of grooves 4 and from the second group of grooves 5 of the die 1.

In other words, the projections 12 of the first group are countershaped with respect to the grooves 4 of the first group, whereas the projections 13 of the second group are countershaped with respect to the grooves 5 of the second group.

According to one embodiment, the snack 10 has projections 12, 13 of ribs with a substantially solid V-shape. The vertex of the V-shaped projection 12, 13 may be pointed or rounded. In this case, the grooves 4, 5 of the through cavity 2 of the die 1 are substantially V-shaped.

According to another embodiment, the projections 12, 13 have a substantially solid U-shape, obtained from the countershaped U-shape of the grooves 4, 5. In other words, the projections 12, 13 have a lobe shape. In the embodiment in which the grooves 4 of the first group and the grooves 5 of the second group are defined by the intersection of a first and a second triangle 6, 7, the projections 12 of the first group are substantially the points of the first triangle 6, whereas the projections 13 of the second group are substantially the points of the second triangle 7.

In the embodiment in which the grooves 4 of the first group and the grooves 5 of the second group are defined by the intersection of a first and a second star 8, 9, the projections 12 of the first group are substantially the points of the first star 8, whereas the projections 13 of the second group are substantially the points of the second star 9.

A production plant of edible snacks for animals, according to the present invention, is described below.

The production plant 100 further comprises at least:
- a dosing unit 101 of ingredients of the solid and/or liquid type;
- a kneading unit 102 of the ingredients so as to obtain a dough;
- an extrusion and cooking unit 103 of the dough, which comprises a die 1 according to what is described above.

The die 1 receives the cooked dough at the inlet to the through cavity 2 and supplies elongated products at the outlet from the through cavity 2. In this context, the elongated products are also indicated as "strings".

Preferably, the production plant 100 comprises a cutting unit 104 operatively active on the elongated products coming from the die 1 so as to cut them transversely and to obtain a plurality of edible snacks 10.

Preferably, the cutting unit 104 comprises a cutting station in which the products to be cut are arranged and a double-edged guillotine arranged at the cutting station and mobile in alternative motion between a first position above the cutting station and a second position below said cutting station. In this way, an elongated product at the outlet from the die 1 is cut alternatively from opposite sides of the cutting station.

Preferably, a cooling unit (not shown) for cooling the snacks 10 is placed downstream of the cutting unit 104. In this way, the elongated products are cut into snacks 10 and subsequently cooled substantially to room temperature.

Preferably, the production plant 100 further comprises a compression screw 105 of the dough placed upstream of the extrusion and cooking unit 103.

The extrusion and cooking unit 103 comprises one or more extrusion screws 106 prevalently developing along an advancing direction. The compression screw 105 has an inclined development with respect to the development direction of the extrusion screw 106, i.e. with respect to the advancing direction.

Preferably, the compression screw 105 has a substantially orthogonal development with respect to the development direction of the extrusion screw 106.

Preferably, the extrusion and cooking unit 103 comprises a gas removal station 107 for removing gas from the dough placed upstream of the die 1. In the sector, the gas removal operation is known by the term "venting". The venting operation is particularly important as the snack must have a rubbery texture to maintain its efficacy, but at the same time it must be fully digestible for the animal. Without venting, the cooking would instead cause an undesired expansion effect.

A production process of edible snacks for animals, according to the present invention, is described below.

The production process comprises the step of dosing at least a first amount of solid ingredients and/or a second amount of liquid ingredients according to a predetermined recipe. The recipes to which reference is made herein are of the known type therefore they will not be described further.

The process comprises the step of kneading the dosed ingredients so as to obtain a dough. The dough is then extruded and cooked.

After that, the process comprises the step of making the extruded and cooked dough pass into a die 1 according to what is described above. The die 1 receives the cooked dough at the inlet to the through cavity 2 and supplies elongated products or strings at the outlet from the through cavity 2.

The process then continues with a step of cutting the elongated products into a plurality of edible snacks 10. Subsequently, the snacks 10 are cooled substantially to a predefined temperature, e.g. to room temperature.

Preferably, the process also comprises a step of compressing the dough before extruding it. Such step is preferably performed in the compression screw 105 introduced above. In this context, we also talk about a forced feeding step.

From the description provided, the characteristics of the die, the plant and the production process of edible snacks for animals are clear.

In particular, the particular shape of the through cavity of the die, with an alternation of grooves of different depths enables edible snacks to be formed which can guarantee the repeatable cleaning of teeth with constancy. In particular, in the embodiment in which the grooves of the first group and the grooves of the second group are respectively three, a snack is obtained with three projections or ribs of the first group, of larger dimensions than three projections of ribs of the second group. Two of the three projections of the first group enable a solid support base to be obtained, whereas the third projection of the first group, opposite the other two, is suitable for penetrating between the animal's teeth. Furthermore, the projections of the second group, having smaller dimensions than those of the first group, meet the tooth already in the snack crushing step and act as a brush on the surface of the tooth.

Furthermore, the fact that the elongated products are cut into snacks and subsequently cooled, enables the dimensions of the cooling unit to be reduced as cooling a plurality of loose items takes up less space than cooling elongated products still to be cut.

## Claims

1. Die (1) for producing an elongated edible string for animals that is formed by a central core (11) having a prevalent development in a first direction, from which at least one group of projections (12) and a second group group of projections (13) protrude, which also have a prevalent development along the first direction,
said die (1) comprising at least a through cavity (2) having a prevalent development along a longitudinal direction (3), **characterized in that** the through cavity (2) comprises at least a first group of grooves (4) and a second group of grooves (5) having a development substantially parallel to said longitudinal direction (3), in a transversal section with respect to said longitudinal direction (3) each groove (4) of the first group having a greater depth than the depth of each groove (5) of the second group, each groove (4) of the first group alternating with a groove (5) of the second group,
wherein the grooves (4) of the first group and the grooves (5) of the second group are respectively three and they are defined by the intersection of a first geometrical figure (6; 8) and a second geometrical figure (7; 9) with three tips and rotated with respect to one another, said first figure (6; 8) being similar to and larger in size than said second figure (7; 9), the at least one group of projections (12) being countershaped with respect to the grooves (4) of the first group and being obtained from said grooves (4) of the first group, and the second group of projections (13) being countershaped with respect to the grooves (5) of the second group and being obtained from said grooves (5) of the second group.

2. Die (1) according to claim 1, wherein the grooves (4) of the first group have the same depth.

3. Die (1) according to claim 1 or 2, wherein the grooves (5) of the second group have the same depth.

4. Die (1) according to any one of the previous claims, wherein the first figure (6; 8) and the second figure (7; 9) are rotated substantially of 180° with respect to one another.

5. Die (1) according to any one of the previous claims, wherein the first figure (6) and the second figure (7) are triangles.

6. Die (1) according to any one of claims 1 to 4, wherein the first figure (6) and the second figure (7) are three-pointed stars.

7. A production plant (100) of edible snacks (10) for animals, comprising at least:
- a dosing unit (101) of ingredients of the solid and/or liquid type;
- a kneading unit (102) of the ingredients so as to obtain a dough;
- an extrusion and cooking unit (103) of the dough, which comprises a die (1) according to any one of the preceding claims, said die (1) receiving the cooked dough at the inlet of the through cavity (2) and providing elongated strings at the outlet of said through cavity (2);
- a cutting unit (104) operatively active on the elongated strings coming from the die (1) so as to cut them transversely and to obtain a plurality of snacks (10).

8. The production plant (100) according to claim 7, further comprising a cooling unit of the snacks (10) arranged downstream of said cutting unit (104).

9. The production plant (100) according to claim 7 or 8, wherein said cutting unit (104) comprises a cutting station wherein the strings to cut are arranged and a double-edged guillotine arranged at the cutting station and mobile in alternative motion between a first position above said cutting station and a second position below said cutting station.

10. The production plant (100) according to any one of claims 7 to 9, wherein said extrusion and cooking unit (103) comprises one or more extrusion screws (106) developing along an advancing direction of the dough, said production plant (100) further comprising a compression screw (105) for the dough arranged upstream said extrusion and cooking unit (103), said compression screw (105) having a development inclined with respect to said advancing direction of the dough.

11. The production plant (100) according to any one of the claims 7 to 10, wherein said extrusion and cooking unit (103) comprises a gas removal station (107) from the dough arranged upstream said die (1).

12. A production process of edible snacks (10) for animals, comprising the steps of:
- dosing at least a first amount of solid ingredients and/or a second amount of liquid ingredients according to a predetermined recipe;
- kneading the dosed ingredients so as to obtain a dough;
- extruding and cooking the dough;
- making the extruded and cooked dough pass in a die (1) according to any one of claims 1 to 6, said die (1) receiving the cooked dough at the inlet of said through cavity (2) and providing elongated strings at the outlet of said through cavity (2);
- cutting the elongated strings in a plurality of edible snacks (10);
- cooling the snacks (10).

13. The production process according to claim 12, comprising a step of compressing the dough before the step of extruding and cooking the dough.

## Patentansprüche

1. Düse (1) für die Herstellung einer länglichen essbaren Schnur für Tiere, die aus einem zentralen Kern (11) mit einer vorherrschenden Entwicklung in einer ersten Richtung geformt ist, von dem aus mindestens eine Gruppe von Vorsprüngen (12) und eine zweite Gruppe von Vorsprüngen (13) hervorstehen, die auch eine vorherrschende Entwicklung entlang der ersten Richtung aufweisen,
wobei die Düse (1) mindestens einen Durchgangshohlraum (2) mit einer vorherrschenden Entwicklung entlang einer Längsrichtung (3) umfasst, **dadurch gekennzeichnet, dass** der Durchgangshohlraum (2) mindestens eine erste Gruppe von Rillen (4) und eine zweite Gruppe von Rillen (5) umfasst, die eine Entwicklung im Wesentlichen parallel zur Längsrichtung (3) aufweisen, wobei in einem Querschnitt in Bezug auf die Längsrichtung (3) jede Rille (4) der ersten Gruppe eine größere Tiefe aufweist als die Tiefe jeder Rille (5) der zweiten Gruppe aufweist, wobei sich jede Rille (4) der ersten Gruppe mit einer Rille (5) der zweiten Gruppe abwechselt,
wobei die Rillen (4) der ersten Gruppe und die Rillen (5) der zweiten Gruppe jeweils drei sind und sie durch den Schnittpunkt einer ersten geometrischen Figur (6; 8) und einer zweiten geometrischen Figur (7; 9) mit drei Spitzen definiert und gegeneinander verdreht sind, wobei die erste Figur (6; 8) der zweiten Figur (7; 9) ähnlich und größer als diese ist, wobei die mindestens eine Gruppe von Vorsprüngen (12) in Bezug auf die Rillen (4) der ersten Gruppe eine Gegenform aufweist und aus den Rillen (4) der ersten Gruppe erhalten wird und wobei die zweite Gruppe von Vorsprüngen (13) in Bezug auf die Rillen (5) der zweiten Gruppe eine Gegenform aufweist und aus den Rillen (5) der zweiten Gruppe erhalten wird.

2. Düse (1) nach Anspruch 1, wobei die Rillen (4) der ersten Gruppe dieselbe Tiefe aufweisen.

3. Düse (1) nach Anspruch 1 oder 2, wobei die Rillen (5) der zweiten Gruppe dieselbe Tiefe aufweisen.

4. Düse (1) nach einem der vorhergehenden Ansprüche, wobei die erste Figur (6; 8) und die zweite Figur (7; 9) im Wesentlichen um 180° gegeneinander verdreht sind.

5. Düse (1) nach einem der vorhergehenden Ansprüche, wobei die erste Figur (6) und die zweite Figur (7) Dreiecke sind.

6. Düse (1) nach einem der Ansprüche 1 bis 4, wobei die erste Figur (6) und die zweite Figur (7) dreizackige Sterne sind.

7. Produktionsanlage (100) essbarer Snacks (10) für Tiere, mindestens umfassend:
- eine Dosiereinheit (101) für Zutaten fester und/oder flüssiger Art;
- eine Kneteinheit (102) der Zutaten, um einen Teig zu erhalten;
- eine Extrusions- und Kocheinheit (103) des Teigs, die eine Düse (1) nach einem der vorhergehenden Ansprüche umfasst, wobei die Düse (1) den gekochten Teig am Einlass des Durchgangshohlraums (2) empfängt und am Auslass des Durchgangshohlraums (2) längliche Schnüre bereitstellt;
- eine Schneideinheit (104), die auf den länglichen Schnüren, die von der Düse (1) kommen, derart betriebswirksam aktiv ist, um sie quer zu schneiden und um mehrere Snacks (10) zu erhalten.

8. Produktionsanlage (100) nach Anspruch 7, ferner umfassend eine Kühleinheit der Snacks (10), die nachgelagert nach der Schneideinheit (104) angeordnet ist.

9. Produktionsanlage (100) nach Anspruch 7 oder 8, wobei die Schneideinheit (104) eine Schneidstation, in der die zu schneidenden Schnüre angeordnet sind, und eine zweischneidige Guillotine umfasst, die an der Schneidstation angeordnet ist und in abwechselnder Bewegung zwischen einer ersten Position oberhalb der Schneidstation und einer zweiten Position unterhalb der Schneidstation beweglich ist.

10. Produktionsanlage (100) nach einem der Ansprüche 7 bis 9, wobei die Extrusions- und Kocheinheit (103) eine oder mehrere Extruderschnecken (106) umfasst, die sich entlang einer Vorschubrichtung des Teigs entwickeln, wobei die Produktionsanlage (100) ferner eine Kompressionsschnecke (105) für den Teig umfasst, die vorgelagert vor der Extrusions- und Kocheinheit (103) angeordnet ist, wobei die Kompressionsschnecke (105) eine Entwicklung aufweist, die in Bezug auf die Vorschubrichtung des Teigs geneigt ist.

11. Produktionsanlage (100) nach einem der Ansprüche 7 bis 10, wobei die Extrusions- und Kocheinheit (103) eine Station zur Entfernung des Gases (107) aus dem Teig umfasst, die vorgelagert vor der Düse (1) angeordnet ist.

12. Verfahren zur Herstellung essbarer Snacks (10) für Tiere, mindestens umfassend die Schritte:
- Dosieren mindestens einer ersten Menge fester Zutaten und/oder einer zweiten Menge flüssiger Zutaten gemäß einem vorgegebenen Rezept;
- Kneten der dosierten Zutaten, um einen Teig zu erhalten;
- Extrudieren und Kochen des Teigs;
- Durchlaufenlassen des extrudierten und gekochten Teigs durch eine Düse (1) nach einem der Ansprüche 1 bis 6, wobei die Düse (1) den gekochten Teig am Einlass des Durchgangshohlraums (2) empfängt und am Auslass des Durchgangshohlraums (2) längliche Schnüre bereitstellt;
- Schneiden der länglichen Schnüre in mehrere essbare Snacks (10);
- Kühlen der Snacks (10).

13. Herstellungsverfahren nach Anspruch 12, umfassend einen Schritt des Komprimierens des Teigs vor dem Schritt des Extrudierens und Kochens des Teigs.

## Revendications

1. Buse (1) pour la production d'une ficelle comestible allongée pour des animaux qui est formée par un noyau central (11) ayant un développement prédominant dans une première direction, à partir duquel au moins un groupe de saillies (12) et un second groupe de saillies (13) font saillie, qui ont également un développement prédominant le long de la première direction,
ladite buse (1) comprenant au moins une cavité traversante (2) ayant un développement prédominant le long d'une direction longitudinale (3), **caractérisée en ce que** la cavité traversante (2) comprend au moins un premier groupe de rainures (4) et un second groupe de rainures (5) ayant un développement sensiblement parallèle à ladite direction longitudinale (3), dans une section transversale par rapport à ladite direction longitudinale (3), chaque rainure (4) du premier groupe ayant une profondeur supérieure à la profondeur de chaque rainure (5) du second groupe, chaque rainure (4) du premier groupe alternant avec une rainure (5) du second groupe,
dans lequel les rainures (4) du premier groupe et les rainures (5) du second groupe sont respectivement trois et elles sont définies par l'intersection d'une première figure géométrique (6 ; 8) et d'une seconde figure géométrique (7 ; 9) avec trois pointes et tournées l'une par rapport à l'autre, ladite première figure (6 ; 8) étant similaire et plus grande en taille que ladite seconde figure (7 ; 9), le au moins un groupe de saillies (12) étant contreformé par rapport aux rainures (4) du premier groupe et étant obtenu à partir desdites rainures (4) du premier groupe, et le second groupe de saillies (13) étant contreformé par rapport aux rainures (5) du second groupe et étant obtenu à partir desdites rainures (5) du second groupe.

2. Buse (1) selon la revendication 1, dans laquelle les rainures (4) du premier groupe ont la même profondeur.

3. Buse (1) selon la revendication 1 ou 2, dans laquelle les rainures (5) du second groupe ont la même profondeur.

4. Buse (1) selon l'une quelconque des revendications précédentes, dans laquelle la première figure (6 ; 8) et la seconde figure (7 ; 9) sont tournées sensiblement de 180° l'une par rapport à l'autre.

5. Buse (1) selon l'une quelconque des revendications précédentes, dans laquelle la première figure (6) et la seconde figure (7) sont des triangles.

6. Buse (1) selon l'une quelconque des revendications 1 à 4, dans laquelle la première figure (6) et la deuxième figure (7) sont des étoiles à trois branches.

7. Ligne de production (100) de snacks comestibles (10) pour des animaux, comprenant au moins :
- une unité de dosage (101) des ingrédients de type solide et/ou liquide ;
- une unité de pétrissage (102) des ingrédients de manière à obtenir une pâte ;
- une unité d'extrusion et de cuisson (103) de la pâte, qui comprend une buse (1) selon l'une quelconque des revendications précédentes, ladite buse (1) recevant la pâte cuite à l'entrée de la cavité traversante (2) et fournissant des ficelles allongées à la sortie de ladite cavité traversante (2) ;
- une unité de coupe (104) fonctionnellement active sur les ficelles allongées provenant de la buse (1) de manière à les couper transversalement et à obtenir une pluralité de snacks (10).

8. Ligne de production (100) selon la revendication 7, comprenant en outre une unité de refroidissement des snacks (10) agencée en aval de ladite unité de coupe (104).

9. Ligne de production (100) selon la revendication 7 ou 8, dans laquelle ladite unité de coupe (104) comprend une station de coupe dans laquelle les ficelles à couper sont agencées et une guillotine à double tranchant agencée au niveau de la station de coupe et mobile en mouvement alternatif entre une première position au-dessus de ladite station de coupe et une seconde position au-dessous de ladite station de coupe.

10. Ligne de production (100) selon l'une quelconque des revendications 7 à 9, dans laquelle ladite unité d'extrusion et de cuisson (103) comprend une ou plusieurs vis d'extrusion (106) se développant le long d'une direction d'avancement de la pâte, ladite ligne de production (100) comprenant en outre une vis de compression (105) pour la pâte disposée en amont de ladite unité d'extrusion et de cuisson (103), ladite vis de compression (105) ayant un développement incliné par rapport à ladite direction d'avancement de la pâte.

11. Ligne de production (100) selon l'une quelconque des revendications 7 à 10, dans laquelle ladite unité d'extrusion et de cuisson (103) comprend une station d'extraction de gaz (107) de la pâte disposée en amont de ladite buse (1).

12. Procédé pour la production de snacks comestibles (10) pour des animaux, comprenant les étapes de :
- doser au moins une première quantité d'ingrédients solides et/ou une deuxième quantité d'ingrédients liquides selon une recette prédéterminée ;
- pétrir les ingrédients dosés de manière à obtenir une pâte ;
- extruder et cuire la pâte ;
- faire passer la pâte extrudée et cuite dans une buse (1) selon l'une quelconque des revendications 1 à 6, ladite buse (1) recevant la pâte cuite à l'entrée de ladite cavité traversante (2) et fournissant des ficelles allongées à la sortie de ladite cavité traversante (2) ;
- couper les ficelles allongées dans une pluralité de snacks comestibles (10) ;
- refroidir les snacks (10).

13. Procédé de production selon la revendication 12, comprenant une étape de compresser la pâte avant l'étape d'extruder et de cuire la pâte.
